# EUROPEAN PATENT SPECIFICATION

(11) **EP 2 440 095 B1**
(45) Date of publication and mention of the grant of the patent: **09.08.2017**
(21) Application number: 10728332.7
(22) Date of filing: 07.06.2010
(51) Int. Cl.: A47J 43/00, B26D 7/06

(54) **FEEDING TUBE FOR A FOOD PROCESSOR AND FOOD PROCESSOR PROVIDED WITH A FEEDING TUBE**
FÜLLSCHACHT FÜR EIN KÜCHENGERÄT UND KÜCHENGERÄT MIT EINEM FÜLLSCHACHT
TUYAU D'ALIMENTATION POUR ROBOT-MIXEUR ET ROBOT-MIXEUR DOTÉ D'UN TUYAU D'ALIMENTATION

(30) Priority: 12.06.2009 EP 09162537
(43) Date of publication of application: 18.04.2012
(73) Proprietor: Koninklijke Philips N.V., 5656 AE Eindhoven (NL)
(72) Inventor: FILIPITSCH, Harald, 5656 AE Eindhoven (NL); OBERSTEINER, Heimo, 5656 AE Eindhoven (NL); KAEFER, Monika, 5656 AE Eindhoven (NL); MOSER, Wolfgang, 5656 AE Eindhoven (NL); HOLZBAUER, Juergen, 5656AE Eindhoven (NL)
(74) Representative: Coops, Peter
(86) International application number: PCT/IB2010/052517
(87) International publication number: WO 2010/143122

(56) References cited:
- DE-A1- 2 302 943
- DE-A1-102007 021 371
- FR-A- 2 681 279
- FR-A- 2 873 010
- US-A- 3 410 517
- US-A- 4 624 030
- US-A- 4 978 100

## Description

### FIELD OF THE INVENTION

The invention relates to a feeding tube for conveying a food article to a food processing tool, the feeding tube comprising an inlet opening and an outlet opening, an inner wall connecting the inlet opening and the outlet opening, said inner wall defining a passage, having a passage length, through which a food article is conveyable in a conveying direction from the inlet opening to the outlet opening.

The invention further relates to a food processor having a housing, a food processing tool, provided in said housing, for processing a food article, and a feeding tube for conveying a food article to be processed to the food processing tool.

### BACKGROUND OF THE INVENTION

Food processors having a feeding tube for conveying food articles to food processor processing means are widely known. In general, feeding tubes have an inlet opening in which the food article is to be inserted, and an outlet opening for delivering the food article to the processing means, the inlet opening and the outlet opening being connected by a passage allowing the food article to be conveyed from the inlet opening to the outlet opening. Feeding tubes have to comply with health and safety legislation in most countries. Due to this legislation there is a relation between the height of the feeding tube and the cross section of the passage through which the food is conveyed. This implies that when a large passage cross section is required, e.g. to allow reasonably large food items to be conveyed, a tall feeding tube must be constructed. Ease of use of the food processor requires the feeding tube to allow passage of such reasonably large food articles, reducing the need to cut the food article into small pieces before the food article can be processed. The passage cross section is therefore rather large. However, when small food articles are to be processed, a feeding tube with a smaller passage cross section can be beneficial. It would therefore be desirable if the feeding tube passage cross section could be changed.

German Offenlegungsschrift DE 2 302 943 discloses a feeding tube in which an insert can be placed to reduce the feeding tube's passage cross section. A comparable approach is taken in the French patent application FR 2 681 279, which identifies the problem that the feeding tube is only rarely well adapted for the food article to be processed. This latter patent document suggests to provide multiple insert tubes having different inner diameters to be inserted in the feeding tube. The user has to insert the insert tube most suited for the size of the food article to be processed before inserting a food article into the feeding tube. When food articles of different sizes have to be processed, this requires the user to assess the suitability of the insert tube and possibly change the insert tube before the next food article can be processed. This is a tedious task for the user and slows down the processing. Furthermore the approach of FR 2 681 279 requires a manifold of insert tubes.

These known approaches require separate insert bodies to create different feeding tube passage cross sections. When a number of different feeding tube passage cross sections are required, a variety of different insert parts is required as well. This leaves the user with a large number of parts which are prone to loss and the task of selecting the appropriate insert part for the food article to be processed. Furthermore, each part requires storing volume in for example a kitchen closet.

It is known from DE 10 2007 021 371 A to provide a food processor feeding tube arranged to convey a food article to a food processing tool, the feeding tube comprising an inlet opening and an outlet opening, an inner wall connecting the inlet opening and the outlet opening, said inner wall defining a passage, through which a food article is conveyable in a conveying direction from the inlet opening to the outlet opening, wherein, the inner wall comprises an adjustable inner wall portion for adjusting a cross section of the passage in a direction having a component perpendicular to the conveying direction, which inner wall portion is adjustable irrespective of the food article being present.

### SUMMARY OF THE INVENTION

It is an object of the invention to provide a feeding tube of which the minimum passage cross section can be changed in a user friendly way without the need for a variety of separate insert parts being difficult to store and prone to loss.

A food processor feeding tube according to the present invention is characterised in that the adjustable wall portion comprises a slideable body for changing the distance between the adjustable wall portion and an inner wall portion opposite the adjustable wall portion to allow easy feeding of said food article to the feeding tube and limited play of the food article in the passage during processing.

When a user requires one or more food articles to be processed using a food processor configuration comprising the feeding tube of the invention, he or she first sets up the food processor so that it is ready to operate. This might include connecting the feeding tube of the invention to the food processor in case a removable feeding tube is used. In other cases, the feeding tube might already be connected to the food processor. The latter being self-evident when a food processor with a non-removable feeding tube is used. A food processor can be any device processing food articles, e.g. a slicer, juicer, grater, blender, chopper, masher or a device offering a combination of food processing possibilities. Depending on the size of the food article to be processed, the user can choose to adjust the cross section of the passage in a direction perpendicular to the conveying direction, i.e. to adjust a reduced passage, by adjusting the adjustable inner wall portion such that the food article to be processed fits well into the feeding tube's passage. The cross section can be adjusted for the entire passage length between the inlet opening and the outlet opening, or for a part of the passage length without deviating from the invention. The minimum cross section of the passage can be defined as that cross section, considered in a direction perpendicular to a longitudinal axis of the feeding tube's passage, which is smallest when taking into account the entire passage from the inlet opening to the outlet opening. In the remainder of this document, the term passage cross section will denote the minimal passage cross section unless stated otherwise. When using the feeding tube of the invention, the user can easily adjust the passage cross section to the food article to be processed. This adjusted passage provides an optimal passage for the relevant food article, allowing the user on the one hand to feed the food article without any difficulties into the feeding tube, and on the other hand to limit the play of the food article in the passage during processing. The limited play of the food article in the feeding tube's passage prevents the food article from bouncing around the passage during processing. Different kinds and/or sizes of food articles to be processed may require different minimum cross sections. The processing of the food article in a food processor typically involves high-speed rotating food processing tools. Such tools, for example a slicing knife or a grating disc, exert forces on the food article being processed. In the undesired situation that the food article has much play in the feeding tube's passage, said forces will cause the food article being processed to spin and/or bounce around the passage of the feeding tube. Due to these movements of the food article, the end result of the food processing can be influenced. For example, when slicing a food article, such as a carrot, cucumber or the like, the slices become irregular, which can be very inconvenient if the user intends to have regular slices, e.g. to make a well presented salad. Also, the bouncing of a food article can produce quite a lot of sound, especially when hard food articles are to be processed. In cases where the food article bounces violently, the user might develop some fear of using the food processor. However, when the food article is processed using a feeding tube according to the invention, the user can use the adjustable inner wall portion to create a feeding tube passage in which the food article fits nicely. Therefore, the food article has almost no space for bouncing and a more controlled end result is reached. When for example the food processor is used for slicing a food article, the slices will all be of a regular form.

As the adjustable inner wall portion is integrated with the feeding tube, no loose parts are needed for adjusting the passage cross section. Therefore, no parts can get lost or require storage space in for example a kitchen closet. It is very convenient for the user not to have separate parts to insert into the feeding tube as required by the prior art. Not only as no parts can get lost or require a search before being located, but also as the user does not have to spend time to correctly place the insert in the feeding tube passage. While the food article is being processed, the user might use a pusher to force the food article through the passage as is widely known in the art.

In an advantageous embodiment the minimum cross section of the passage is continuously adjustable. In such an embodiment, the user can adjust the cross section of the passage such that is has an optimal size for the food article to be processed.

The slideable body of the invention is easy to implement and thereby reduces design and manufacturing costs. The slidable body can be can be made of any hard material, especially metals (e.g. aluminum, copper, stainless steel, or the like), or hard plastics. To improve the cleanability of the slidable body, it can be coated with a smooth material, for example polytetrafluoroethylene (PTFE), a nano-coating or a sol-gel material. This coating can also improve the slideability of the sliding body.

In a preferred embodiment of the feeding tube according to the invention the adjustable inner wall portion has a profile, being in the passage, which profile increases, seen in a direction along the conveying direction from the inlet opening to the outlet opening. Having such a profile, the adjustable inner wall portion will act as a guiding element for the food article to be processed. This reduces the effort the user has to make to position the food article correctly with respect to the passage cross section, improving the user friendliness of the feeding tube.

In a preferred embodiment of the feeding tube according to the invention the feeding tube has a control unit located on its outer side for controlling the adjustable inner wall portion. A control unit on the outer side of the feeding tube is easy to access for the user as the user does not have to put his or her fingers inside the feeding tube passage to adjust the adjustable inner wall portion. Furthermore, the control unit on the outer side of the feeding tube is likely to stay clean during use of the feeding tube, while the inner side of the feeding tube can get soiled during use. Having a control unit on the outer side of the feeding tube improves its user friendliness and ease of use.

In a preferred embodiment of the feeding tube according to the invention the feeding tube further comprises an actuator for non-manually actuating the adjustable inner wall portion. Such an actuator relieves the user from the burden of manually operating the adjustable inner wall portion. This contributes to the ease of use and user friendliness of the feeding tube. This is especially true for users which have only limited abilities to operate the adjustable inner wall portion by hand, e.g. elderly users which have lost power in their hands, or persons with disabilities like spasms or a disease like rheumatism.

In preferred embodiment of the feeding tube according to the invention the actuator comprises an electric actuator unit. Electric motors are cheap and well-known components of kitchen appliances. Implementing an electric motor, i.e. an electric actuator unit, as part of the actuator leads to comparatively low design and manufacturing costs as design staff is well aware of the practicalities of implementing electric motors.

In a preferred embodiment of the feeding tube according to the invention further comprises a measurement unit for measuring the size of a food article, during use inserted into the feeding tube passage, and a control unit for controlling the actuator for actuating the adjustable inner wall portion, wherein the control unit, during use, controls the actuator to adjust the adjustable inner wall portion to the size of said food article measured by the measurement unit. Automatic adjustment of the passage cross section based on measurement of the size, e.g. the cross section of the food article as seen in a direction perpendicular to the conveying direction, relieves the user from the burden of adjusting the passage cross section and adapting it when the cross section of the food article changes, e.g. when a food article has a changing cross section along its longitudinal axis which is the case when feeding for example a pear, piece of apple, or the like, or when different food articles being processed after each other have a different cross section. The passage cross section is thus automatically adjusted to the what is needed when processing a given food article.

The invention further relates to a food processor having a housing, a food processing tool provided in said housing, for processing a food article, and the feeding tube according to the invention cooperating with said housing.

In a preferred embodiment of the food processor according to the invention, having a housing, a food processing tool, provided in said housing and configured for processing a food article, a feeding tube according to the invention comprising an actuator for non-manually actuating the adjustable inner wall portion, said feeding tube arranged for cooperating with said housing, and a user interface for controlling the food processor, the actuator is controlled via the user interface. In this configuration the user is able to control both the food processor and the feeding tube passage minimum cross section from one user interface. This simplifies operation of the food processor, making the food processor more user friendly.

With reference to the claims it is noted that the invention also relates to all possible combinations of features and/or measures defined in the various claims.

It is to be noted that the patent application WO 2007/080571 A2 discloses a food processing device having a feeding tube comprising a plurality of so-called fingers which are radially displaceable leaf springs located near the end of the feeding tube near to the food processing tool. These fingers are located on the inside of the feeding tube in its passage and are manipulated by the food article being moved through the passage. Contrary thereto the feeding tube according to the invention comprises an adjustable inner wall portion that can be actuated fully independent from the moving food article, but under full control of the user. The feeding tube according to the invention allows adjustment of the adjustable wall portion irrespective of the presence of a food article. The user can actuate the device by direct manual manipulation. Alternatively, magnetic and/or electric actuators can be used. The use of air or hydraulic pressure, or many other ways of actuating the adjustable inner wall portion are feasible as well.

It is to be noted that German patent document DE-A-10 2007 021 371 discloses a hopper comprising a hingeable wall element for releasing articles stuck in the hopper. The moveable wall element is not disclosed to be suited to adjust the cross section to limit play of the food article during processing as its main purpose is to create play in order to release the stuck food article.

It is further to be noted that US patent document US-A-4 624 030 discloses a stuffing machine having a supporting device for releasably embracing a portion of the stuffed material. During the embracing the portion of the stuffed material is rotated relative to another part of the stuffed material. While being held in embrace, the stuffed material cannot move in the device disclosed by US-A-4 624 030.

### BRIEF DESCRIPTION OF THE DRAWINGS

A detailed description of the invention is provided below with reference to Figures 1A - 1B and 2A to 2C. The description is provided by way of a non-limiting example to be read with reference to the drawings in which:
Figure 1A shows a first schematic side view, partly cut, of a first embodiment of the feeding tube according to the invention, connected to a food processing device.
Figure 1B shows a second schematic side view, partly cut, of the first embodiment of the feeding tube according to the invention as shown in Figure 1A.
Figure 2A shows a first schematic bottom view, partly cut, of the first embodiment of the feeding tube according to the invention as shown in Figure 1A.
Figure 2B shows a second schematic bottom view, partly cut, of the first embodiment of the feeding tube according to the invention as shown in Figure 1A.
Figure 2C shows a third schematic bottom view, partly cut, of the first embodiment of the feeding tube according to the invention as shown in Figure 1A.
Figure 3A shows a first schematic side view, partly cut, of another feeding tube that does not form part of the invention but is included by way of information only and which is shown connected to a food processing device.
Figure 3B shows a second schematic side view, partly cut, of the feeding tube as shown in Figure 3A.
Figure 4A shows a first schematic side view, partly cut, of another feeding tube that does not form part of the invention but is included by way of information only and which is shown connected to a food processing device.
Figure 4B shows a second schematic side view, partly cut, of the feeding tube shown in Figure 4A.
Figure 5A shows a first schematic side view, partly cut, of another feeding tube that does not form part of the invention but is included by way of information only and which is shown connected to a food processing device.
Figure 5B shows a second schematic side view, partly cut, of the the feeding tube as shown in Figure 5A.
Figure 6A shows a first schematic top view, partly cut of the feeding tube as shown in Figure 5A.
Figure 6B shows a second schematic top view, partly cut, of the feeding tube as shown in Figure 6A.
Figure 7 shows a schematic front view of a food processor.

### DETAILED DESCRIPTION OF THE EMBODIMENTS

In figures showing the same embodiment or the same parts thereof, the same numbers are used for the same parts.

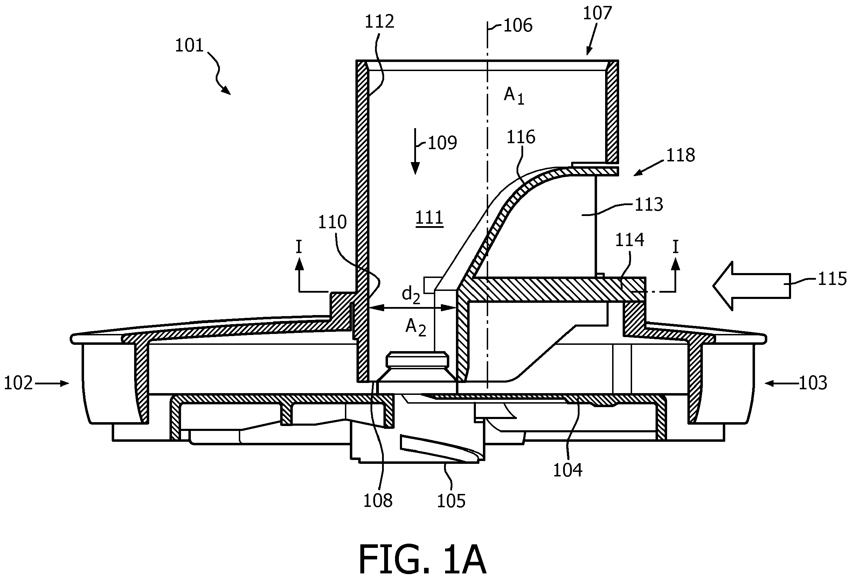

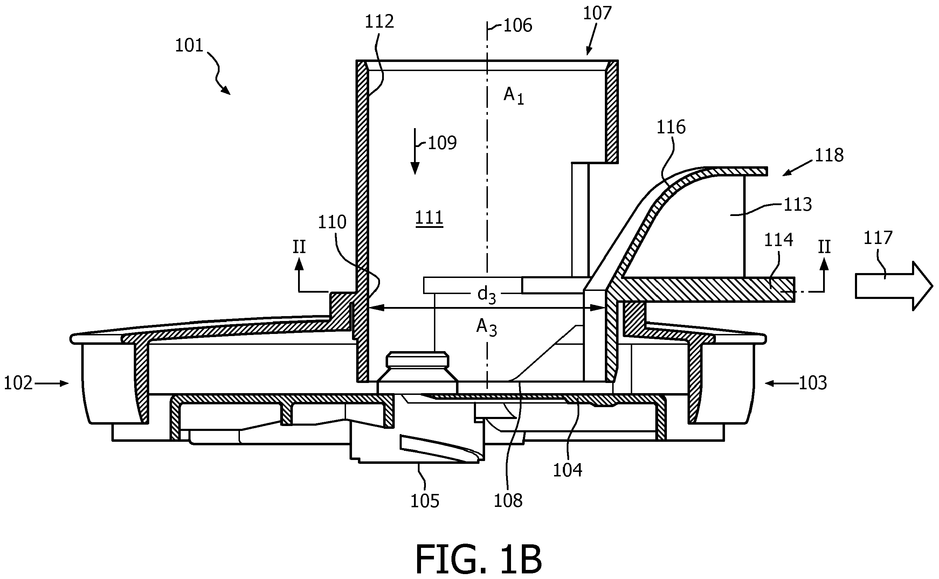

Figure 1 shows a feeding tube 101 attached to a food processor 102 of which only its top part, namely the upper side of its housing 103, the food processing tool 104 and the drive shaft 105 which drives the food processing tool 104 during operation, are visible. Not shown in Figure 1 is a power unit which powers the drive shaft. Such power units, e.g. an electric motor, are well known from the art, as is their construction within a food processor. In this particular case the food processing tool 104 is a slicing knife. Other types of food processor tools are known, e.g. grating disks, chopping disks, mashing disks, et cetera, and can be implemented with the feeding tube 101 alike. Feeding tube 101 has a longitudinal axis 106, an inlet opening 107, and an outlet opening 108. The inlet opening 107 and outlet opening 108 are connected by a passage 111 defined by an inner wall 112 of the feeding tube 101. During use, a food article to be processed (not shown) is introduced into the feeding tube 101 through inlet opening 107. In this embodiment, the inlet opening 107 and outlet opening 108 are located on the longitudinal axis 106. In other embodiments, one or both of these openings may be located in a feeding tube side wall. Along passage 111 the food article is directed, e.g. by a pusher unit (not shown) or other suitable device known in the art, towards the outlet opening in a conveying direction 109. In the specific embodiment of figure 1A the food article will move from the inlet opening 107 to the outlet opening 108 under influence of gravity as well, possibly removing the need for the user to use a pusher or the like. In this specific embodiment, the longitudinal axis 106 of the feeding tube 101 and the passage 111 coincide. In other embodiments the longitudinal axis of the feeding tube and the passage may not coincide, or even have a different orientation. A consequence of the longitudinal axis 106 of the feeding tube 101 and the passage 111 coinciding in this specific embodiment is that the conveying direction 109 is oriented along the longitudinal axis 106. In some other embodiments the orientation of the conveying direction with respect to the longitudinal axis of the feeding tube may change along the passage. With relation to the invention, the passage cross section is measured in a plane perpendicular to the conveying direction 109. The passage cross section can be changed by adjusting an adjustable inner wall portion 118. When the adjustable inner wall portion 118 is adjusted, the distance between the adjustable inner wall portion 118 and an opposite wall portion 110 is changed. The passage cross section is related to the passage diameter. As the invention is applicable to feeding tubes having all kinds of passage cross sections, like circular, elliptical, the overlap of two circles having a different radius, or any other suitable form known in the art, it is noted, in order to prevent confusing when using the term diameter, that when reference is made to a diameter of a cross section, the largest possible length of a straight line through the center of the relevant object from side to side is implied. The distance between the adjustable inner wall portion 118 and the opposite inner wall portion 110 can coincide with this diameter.

Near the inlet opening 107, the passage cross section is A₁. The feeding tube 101 further comprises an adjustable inner wall portion 118, being a slideable body 113 in this embodiment, which can be adjusted by moving handle 114 into or against the direction of arrow 115. On movement of the handle 114, the slideable body 113 will slide in or out of the passage 111, depending on the direction of movement applied to handle 114. When moving the handle 114 into the direction of arrow 115, the feeding tube passage diameter changes. In this figure, the adjustable inner wall portion 118 has been adjusted to have the passage cross section reduced to A₂ by adjusting the adjustable inner wall portion 118 such that the distance between the adjustable inner wall portion 118 and the opposite wall portion 110 is d₂. A₂ is relatively small when compared to A₁, thereby the adjustable inner wall portion 118 has adjusted the feeding tube passage 111 to small diameter food articles, like e.g. carrots, leek, asparagus, or the like. The adjustable inner wall portion 118 has a profile 116. In this specific embodiment the profile 116 is such that the profile increases seen in a direction of the along the longitudinal axis 106 of the feeding tube 101, from the first end 109 to the second end 110. In this embodiment, the profile is substantially of an S-shape. Other profile shapes are possible as well, such as a ramp or a curved sloping line.

Figure 1B, shows the embodiment of Figure 1A wherein the adjustable inner wall portion 118 is adjusted to accommodate large cross section food articles, like e.g. apples, pears, potatoes, beetroot or onions, to pass through the passage 111. To realize this, the slideable body 113 was slid outward by moving the handle 114 into the direction of arrow 117. In this Figure 1B, the position of the slideable body 113 creates a cross section A₃, related to the distance between the adjustable inner wall portion 118 and the opposite wall portion 110 being d₃. As the slideable body 113 is slid to its maximal outer position, diameter A₃ is substantially equal to diameter A₁, thus allowing food articles to pass the passage having a large diameter.

The slidable body 113 can be can be made of any hard materials, especially metals (e.g. aluminum, copper, stainless steel, or the like), or hard plastics. To improve the cleanability of the slidable body 113, it can be coated with a smooth material, for example polytetrafluoroethylene (PTFE), a nano-coating or a sol-gel material.

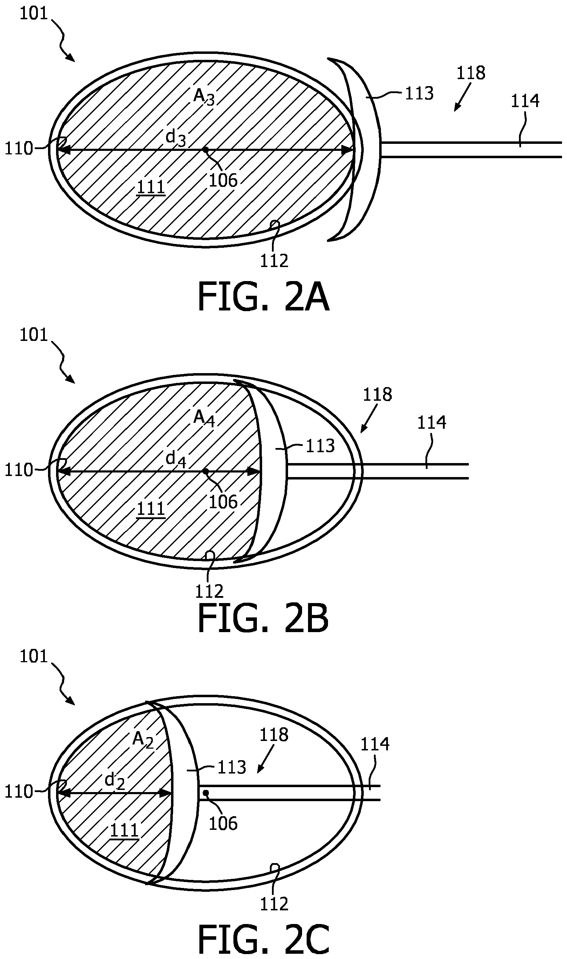

Figures 2A, 2B and 2C further illustrate the notion of the minimum cross section by showing a schematic cut through of the embodiment shown in Figures 1A and 1B. Figure 2C corresponds with the embodiment shown in figure 1A cut along the line indicated I, looking towards the inlet opening 107. A food article (not shown) can pass the feeding tube 101 when it has a cross section smaller or equal than the minimum cross section A₂. When the food article cross section is substantially equal to the minimal cross section A₂ of the food article, the food article will be fixated with respect to the longitudinal axis 106 of the feeding tube 101. Consequently, no or little play is present, preventing the food article from violent behavior in the passage 111 of the feeding tube 101 during processing. While also referring to Figures 1A and 1B, the processing of the food article in a food processor 102 typically involves high-speed rotating food processing tools 104. Such tools, for example a slicing knife or a grating disc, exert forces on the food article being processed. When the food article has little play, these forces cannot lead to bouncing or the like. This can lead to good food processing results, i.e. regularly cut slices, e.g. to make a well presented salad. Also, little play prevents noise being produced by violent behavior of the food article, e.g. when bouncing. This is especially the case when hard food articles are to be processed.

Figure 2A corresponds with the embodiment shown in figure 1B cut along the line indicated II, looking towards the inlet opening 107. The minimum cross section A₃ is substantially equal to the cross section A₁ of the inlet opening 107 (visible in Figure 1B).

Figure 2B shows a third position of the slideable body 113 of the adjustable inner wall portion 118. This position of the slideable body results in the minimum cross section being adjusted to A₄.

In figures 2A, 2B and 2C, d₃, d₄ and d₂ indicate the distances between the adjustable inner wall portion 118 and the opposite wall portion 110 corresponding to respective passage cross sections shown.

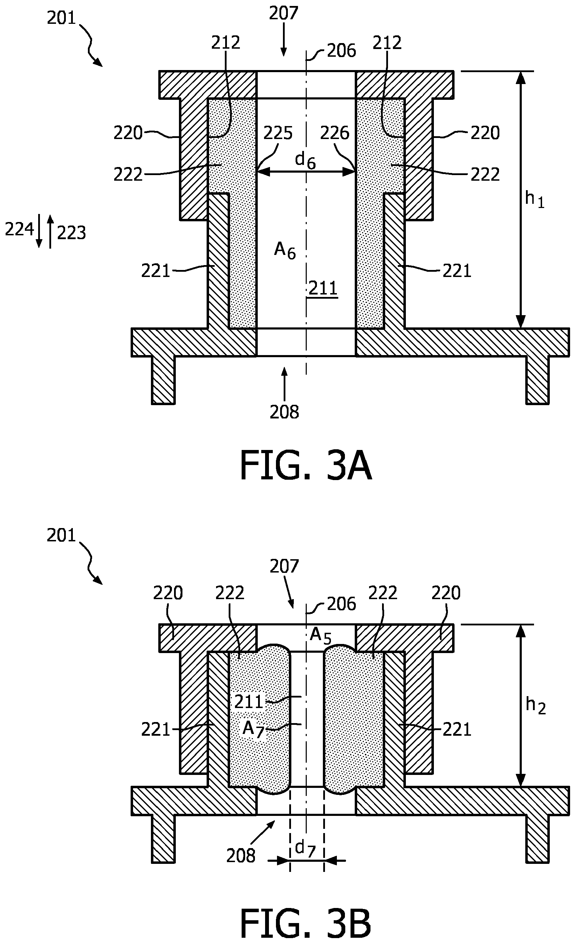

A version of a feeding tubehaving a deformable body is depicted in figures 3A and 3B. This version does not form part of the invention, but is included by way of background information only. In Figures 3A and 3B, the feeding tube 201 having a passage 211 comprises a first part 220 and a second part 221 which are mutably movable along the directions of arrows 223 and 224. A deformable body 222 is provided on an inner side 212 of feeding tube 201. The deformable body 222 might comprise a bag filled with some fluid, such as water, oil, gel or the like, or can be made of one piece of resilient material like rubber or some plastic. The feeding tube 201 is shown as being cut in a plane containing the feeding tube's longitudinal axis 206. Any orientation of this plane would have resulted in a similar cut through as the feeding tube 201 is substantially rotational symmetric. During use, the user will introduce a food article (not shown) in the feeding tube inlet opening 207. The food article will travel through passage 211 towards the outlet opening 208. By changing the relative position of parts 220 and 221 the passage cross section can be adjusted. This movement can be a straight up-down movement as shown in this embodiment. In other embodiments this can for example be a screw movement. In such a screw movement configuration the first part 220 and second part 221 typically have a screw thread and cooperation screw groove. Screw configurations are known per se and not further detailed here.

Figure 3A shows the feeding tube 201 being adjusted to have a maximal passage cross section, implying a maximal distance d₆ between the adjustable wall portion 225 and the inner wall portion 226 opposite the adjustable wall portion 225. This can be seen from the passage 211 having a cross section A₆ equal to the inlet opening cross section A₅. When cross section A₆ is larger than cross section A₅, the same effect will be reached, that is the effect that the passage cross section is maximized. A maximized passage cross section as shown in figure 3A is especially suited when large food articles have to be processed. To accommodate efficient and effective processing of thin food articles the first part 220 and the second part 221 can be moved with respect to each other in the direction of arrow 224 or arrow 223 respectively. An example of a resulting feeding tube is shown in figure 3B. The passage cross section has been narrowed down to A₇. This implies that the distance between the adjustable wall portion 225 and the inner wall portion 226 opposite the adjustable wall portion has been reduced compared to figure 3A. In figure 3B this distance is denoted as d₇. Consequently, only smaller food articles can be fed through passage 211. Figure 3B also illustrates another important feature of the feeding tube, namely that the feeding tube height is related to the passage cross section. A large height, such as h₁ in figure 3A is related to a large passage cross section, a small height, such as h₂ is related to a small passage cross section. In many regions safety regulations are in place with respect to the relation between feeding tube height and feeding tube passage cross section. The feeding tube shown in figures 3A and 3B has the additional benefit that at least in some jurisdictions the relation between the feeding tube height and the minimal passage cross section is in compliance with the safety regulations for all heights of the feeding tube, given that the deformable body volume has a certain minimum value. This minimum value is dependent on the precise configuration of the feeding tube. Furthermore, an additional advantage is that the feeding tube height can be reduced when storing the feeding tube. A feeding tube with reduced height needs less volume in a kitchen closet or other storage space, allowing for easier storage.

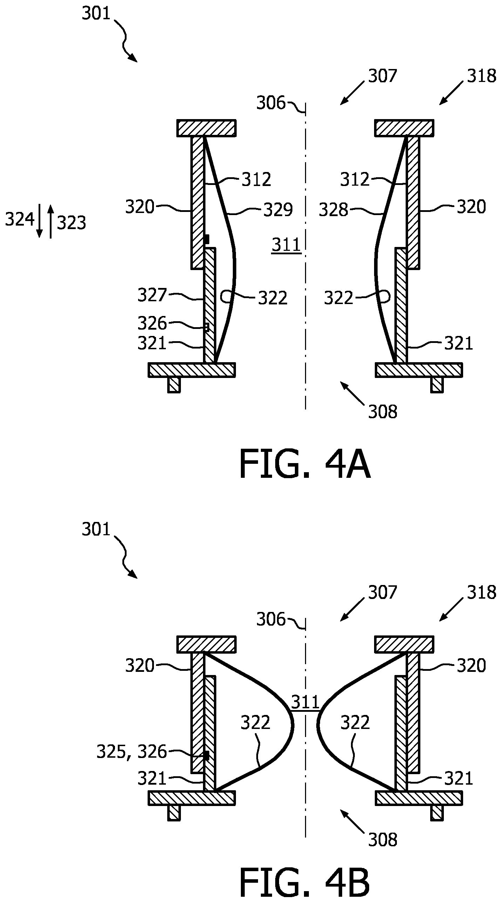

Another feeding tube having a deformable body is depicted in figures 4A and 4B. This feeding tube does not form part of the present invention but is included by way of background only. In Figures 4A and 4B, the feeding tube 301 having a passage 311 comprises a first part 320 and a second part 321 which are mutably movable along the directions of arrows 323 and 324. A deformable body 322 is provided on an inner side 312 of feeding tube 301. This deformable body 322 is an adjustable inner wall portion 318. In this embodiment the deformable body 322 can be made of e.g. a thin, pliable sheet of material like metal, rubber, plastic or the like. The operation of is more or less similar to that of figures 3A and 3B and will not be detailed further. In addition, a detent 325 is present on the inner side 312 of the first part 320 of the feeding tube 301 for cooperation with notch 326 being present on the outside 327 of second part 321 of feeding tube 301. When the first part 320 is moved in the direction of arrow 324 the minimal cross section of passage 311 is decreased while the deformable body 322 is compressed in the direction of the longitudinal axis 306 of the feeding tube 301. In effect, the adjustable inner wall portion 329 will move closer to its opposite inner wall portion 328, thereby reducing the distance between these two wall portions. Due to being compressed, the deformable body will generate a force having a component in the direction of arrow 323. To relieve the user from the effort of holding the first part 320 and the second part 321 in a desired relative position, detent 325 and notch 326 are provided. Detent 325 can releasably connect with notch 326. Such a connection is shown in figure 4B. Releasable detent and notch structures are known from the art and not detailed any further. Figure 4A shows one notch 326 only. A plurality of holes can be provided to cooperate with one or more bolts.

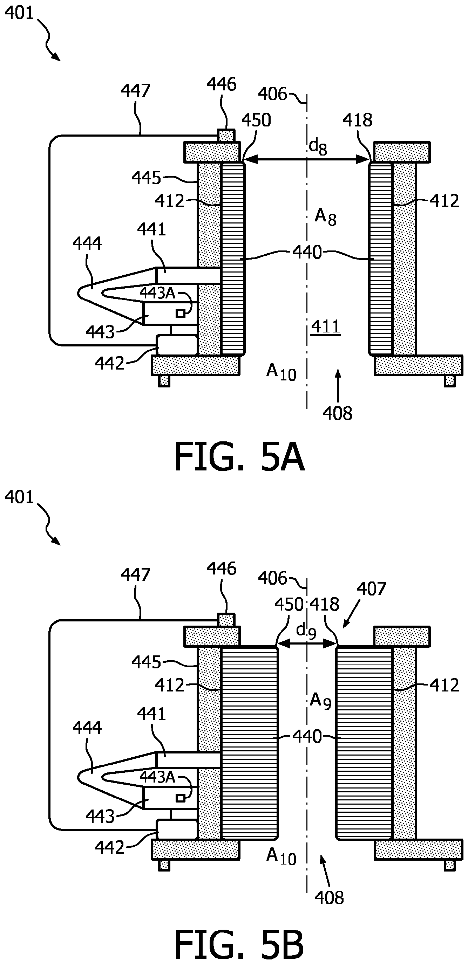

Figures 5A and 5B show a feeding tube having an inflatable body. This version does not fall within the scope of the invention but is included by way of background information only. Feeding tube 401 has an inlet opening 407 and an outlet opening 408. A passage 411 is connecting the inlet opening 407 and the outlet opening 408. On the inner side 412 of the feeding tube 401 an inflatable body 440 acting as an adjustable inner wall portion 418 is arranged which can be inflated using air valve 441. For supplying air to the air valve 441 an air pump 443 is provided, which is connected to the air valve 441 by tube 444. The operation of the air pump 443 is controlled by the control unit 442. The control unit 442 receives input from a measurement unit 446 through communication line 447. In other embodiments this communication can be e.g. wireless. Measurement unit 446 measures a size of a food article (not shown). The control unit 442 controls the actuator, in this version an air pump 443 to actuate the adjustable inner wall portion 418. The air pump 443, for example based on an electric motor driving a fan (both not shown), than actuates through an actuator unit 443A the adjustable inner wall portion 418 to obtain the required minimal cross section A₈, A₉ of the passage 411 wherein the distance between the adjustable inner wall portion 418 and an inner wall portion 450 opposite the adjustable wall portion 418 is d₈, d₉ respectively. Input means can for example be formed by one or more switches, sliders or the like. Other types of suitable, widely known input means can be applied as well.

In another embodiment, somewhat resembling Figures 5A and 5B, not having a measurement unit 446 being connected to the control unit 442, the control unit 442 can have input means shown, allowing the user to input the required minimal cross section A₈ or A₉. Input means can for example be formed by switches, slider or the like. Other types of suitable, widely known input means can be applied as well. In yet another embodiment a measurement unit 446 can be present as well as a control unit 442 allowing the user to input a desired minimum cross section 411, e.g. by overriding the setting resulting from the measurement made by the measurement unit 416.

The inflatable body 440 can be inflated by varying the amount of air inside the inflatable body 440. In other embodiments, it is feasible to use another fluid medium, either gaseous or liquid, for example helium or water.

Figure 5A shows the inflatable body 440 to be inflated such that it allows a passage cross section A₈. Following inflation by forcing air into valve 441, the volume of the inflatable body increases, leading to a smaller passage cross section A₉ as shown in figure 5B. When air is allowed to escape through 441, the volume of the inflatable body can be reduced, and thereby the passage cross section enlarged.

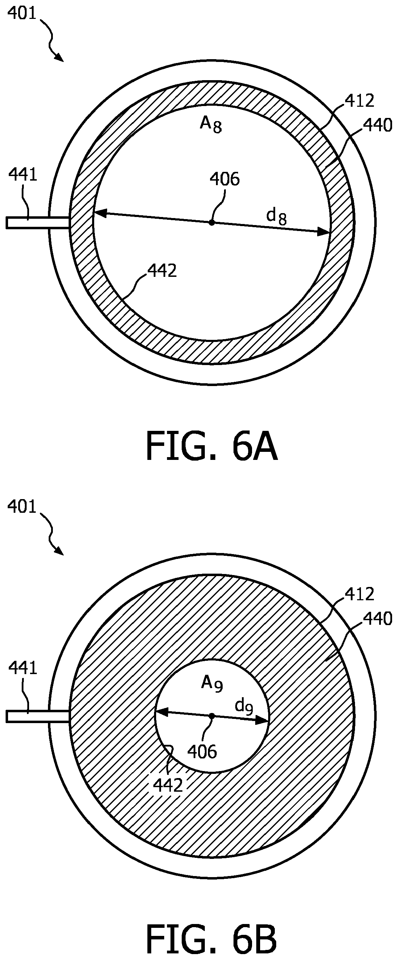

Figures 6A and 6B show a cut through of the feeding tube of figures 5A and 5B respectively, whereby the cut through is done in a direction perpendicular to the feeding tube 401 longitudinal axis 406. Due to the orientation of the cut of figures 6A and 6B, the passage cross sections shown are perpendicular to the feeding tube's longitudinal axis 406. The passage cross section is bounded by the inner side 442 of the inflatable body.

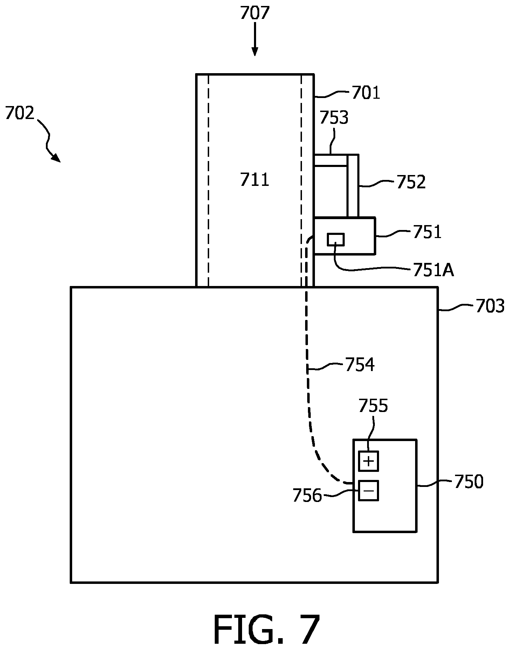

Figure 7 shows a food processor 702 having a feeding tube 701 for feeding food articles to be processed (not shown) to the food processing tool (not shown) located in the housing 703 of the food processor 702. On the outside of the housing 703 a control unit 750 is provided. Food processors having a control unit for the control of the operation of food processors, e.g. to start or stop the food processor 702, to control the speed of the food processing tool, to provide a timer for the duration of the food processing tool operation, et cetera, are widely known and not part of the invention. In this version, the control unit 750 allows the user to control the adjustment of an adjustable inner wall portion being an integral part of a feeding tube. The feeding tube 701 has an inflatable adjustable inner wall portion (not shown). Such an inflatable adjustable inner wall portion is described in more detail in the discussion of Figures 5A, 5B, 6A and 6B. An electric air pump 751 is attached to the feeding tube 701. Air pump 751 is connected to air valve 753 of the inflatable adjustable inner wall portion by tube 752 through an actuator unit 751A. Further, the air pump 751 is connected to the control unit 750 by an electric wire 754 (shown dashed as this wire 754 is not visible from the outside of the food processor 702 and feeding tube 701). During operation a user can adjust the minimum cross section of a passage 711 of the feeding tube 701 by pushing buttons 755 and/or 756. When the user desires to increase the cross section of passage 711 he or she will push button 755 which causes the control unit 750 to send a control signal through wire 754 to the air pump 751 indicating to the air pump 751 to decrease the amount of air in the inflatable adjustable inner wall portion, thereby increasing the cross section of passage 711. If the user on the contrary desires to decrease the cross section of passage 711 he or she will push button 756 which, in a manner similar as described above, will result in a control signal being send to air pump 751 causing the air pump 751 to increase the amount of air in the inflatable adjustable inner wall portion of feeding tube 701.

While the invention has been illustrated and described in detail in the drawings and in the foregoing description, the illustrations and the description are to be considered illustrative or exemplary and not restrictive. The invention is not limited to the disclosed embodiments. It is noted that the feeding tube as well as the food processor according to the invention and their components can be made by applying processes and materials known per se. In the set of claims and the description the word "comprising" does not exclude other elements and the indefinite article "a" or "an" does not exclude a plurality. Any reference signs in the claims should not be construed as limiting the scope.

## Claims

1. A food processor feeding tube (101) arranged to convey a food article to a food processing tool (104), the feeding tube (101) comprising an inlet opening (107) and an outlet opening (108), an inner wall (112) connecting the inlet opening (107) and the outlet opening (108), said inner wall (112) defining a passage (111), through which a food article is conveyable in a conveying direction (109) from the inlet opening (107) to the outlet opening (108),
wherein,
the inner wall (112) comprises an adjustable inner wall portion (118) for adjusting a cross section (A₂, A₃, A₄) of the passage (111) in a direction having a component perpendicular to the conveying direction (109), which inner wall portion (118) is adjustable irrespective of the food article being present, **characterised in that** the adjustable wall portion (118) comprises a slideable body (113) for changing the distance (d₂, d₃, d₄) between the adjustable wall portion (118) and an inner wall portion (110) opposite the adjustable wall portion (118) to allow easy feeding of said food article to the feeding tube and limited play of the food article in the passage during processing.

2. The feeding tube according to claim 1, wherein the adjustable inner wall portion (118) has a profile (116), being present in the passage (111), which profile (116) increases, seen in a direction along the conveying direction (109) from the inlet opening (107) to the outlet opening (108).

3. The feeding tube according to claim 1 or claim 2, having a control unit (442) located on an outer side (445) of the feeding tube (101) for controlling the adjustable inner wall portion (118).

4. The feeding tube according to any one of the preceding claims, wherein the feeding tube (101) comprises an actuator (443, 751) for non-manually actuating the adjustable inner wall portion (118).

5. The feeding tube according to claim 4, wherein the actuator (443, 751) comprises an electric actuator unit (443a, 751a).

6. The feeding tube according claim 4 or 5, further comprising a measurement unit (446) for measuring the size of a food article, during use inserted into the feeding tube passage (111), and a control unit (442) for controlling the actuator (443, 751) for actuating the adjustable inner wall portion (118), wherein the control unit (442), during use, controls the actuator (443, 751) to adjust the adjustable inner wall portion (118) to the size of said food article measured by the measurement unit (446).

7. A food processor having a housing (103), a food processing tool (104), provided in said housing (103) and configured for processing a food article, and the feeding tube (101) according to any one of the previous claims for cooperating with said housing (103).

8. A food processor according to claim 7, wherein the feeding tube (101) is designed as defined in claim 4, wherein a user interface (750) for controlling the food processor (702) is provided and wherein the actuator (443, 751) is controlled via the user interface (750).

## Patentansprüche

1. Küchenmaschinenzuführungsrohr (101), das angeordnet ist, einen Lebensmittelartikel zu einem Lebensmittelverarbeitungswerkzeug (104) zu befördern, wobei das Zuführungsrohr (101) eine Einlassöffnung (107) und eine Auslassöffnung (108) umfasst, wobei eine innere Wand (112), die die Einlassöffnung (107) und die Auslassöffnung (108) verbindet, wobei die innere Wand (112) einen Kanal (111) definiert, durch den ein Lebensmittelartikel in eine Beförderungsrichtung (109) von der Einlassöffnung (107) zur Auslassöffnung (108) beförderbar ist,
wobei,
die innere Wand (112) einen einstellbaren inneren Wandabschnitt (118) zum Einstellen eines Querschnitts (A₂, A₃, A₄) des Kanals (111) in eine Richtung, die eine Komponente aufweist, die senkrecht zur Beförderungsrichtung (109) steht, umfasst, wobei der innere Wandabschnitt (118) unabhängig vom vorhandenen Lebensmittelartikel einstellbar ist, **dadurch gekennzeichnet, dass** der einstellbare Wandabschnitt (118) einen gleitbaren Körper (113) zum Ändern des Abstands (d₂, d₃, d₄) zwischen dem einstellbaren Wandabschnitt (118) und einem inneren Wandabschnitt (110) gegenüber dem einstellbaren Wandabschnitt (118) umfasst, um das einfache Zuführen des Lebensmittelartikels zum Zuführungsrohr und ein begrenztes Spiel des Lebensmittelartikels im Kanal während der Verarbeitung zu erlauben.

2. Zuführungsrohr nach Anspruch 1, wobei der einstellbare innere Wandabschnitt (118) ein Profil (116) umfasst, das im Kanal (111) vorhanden ist, wobei das Profil (116) in eine Richtung entlang der Beförderungsrichtung (109) von der Einlassöffnung (107) zur Auslassöffnung (108) gesehen zunimmt.

3. Zuführungsrohr nach Anspruch 1 oder 2, das zum Steuern des einstellbaren inneren Wandabschnitts (118) eine Steuereinheit (442) aufweist, die an einer Außenseite (445) des Zuführungsrohrs (101) positioniert ist.

4. Zuführungsrohr nach einem der vorhergehenden Ansprüche, wobei das Zuführungsrohr (101) einen Aktuator (443, 751) zum nichtmanuellen Betätigen des einstellbaren inneren Wandabschnitts (118) umfasst.

5. Zuführungsrohr nach Anspruch 4, wobei der Aktuator (443, 751) eine elektrische Aktuatoreinheit (443a, 751a) umfasst.

6. Zuführungsrohr nach Anspruch 4 oder 5, das ferner eine Messeinheit (446) zum Messen der Größe eines Lebensmittelartikels, die während des Gebrauchs in den Zuführungsrohrkanal (111) eingesetzt ist, und eine Steuereinheit (442) zum Steuern des Aktuators (443, 751) zum Betätigen des einstellbaren inneren Wandabschnitts (118) umfasst, wobei die Steuereinheit (442) während des Gebrauchs den Aktuator (443, 751) steuert, um den einstellbaren inneren Wandabschnitt (118) auf die Größe des Lebensmittelartikels, die durch die Messeinheit (446) gemessen wird, einzustellen.

7. Küchenmaschine, die ein Gehäuse (103), ein Lebensmittelverarbeitungswerkzeug (104), das im Gehäuse (103) bereitgestellt und zum Verarbeiten eines Lebensmittelartikels ausgelegt ist, und das Zuführungsrohr (101) nach einem der vorhergehenden Ansprüche zum Zusammenwirken mit dem Gehäuse (103) aufweist.

8. Küchenmaschine nach Anspruch 7, wobei das Zuführungsrohr (101) wie in Anspruch 4 definiert konstruiert ist, wobei eine Benutzerschnittstelle (750) zum Steuern der Küchenmaschine (702) bereitgestellt ist und wobei der Aktuator (443, 751) über die Benutzerschnittstelle (750) gesteuert wird.

## Revendications

1. Tuyau d'alimentation de robot-mixeur (101) agencé pour transporter un article alimentaire vers un outil de transformation alimentaire (104), le tuyau d'alimentation (101) comprenant une ouverture d'entrée (107) et une ouverture de sortie (108), une paroi intérieure (112) raccordant l'ouverture d'entrée (107) et l'ouverture de sortie (108), ladite paroi intérieure (112) définissant un passage (111) à travers lequel un article alimentaire peut être transporté dans un sens de transport (109) depuis l'ouverture d'entrée (107) jusqu'à l'ouverture de sortie (108),
dans lequel
la paroi intérieure (112) comprend une portion de paroi intérieure ajustable (118) pour ajuster une coupe transversale (A₂, A₃, A₄) du passage (111) dans un sens ayant un composant perpendiculaire au sens de transport (109), ladite portion de paroi intérieure (118) est ajustable indépendamment de la présence de l'article alimentaire, **caractérisé en ce que** la portion de paroi ajustable (118) comprend un corps pouvant coulisser (113) pour changer la distance (d₂, d₃, d₄) entre la portion de paroi ajustable (118) et une portion de paroi intérieure (110) à l'opposé de la portion de paroi ajustable (118) pour permettre une alimentation facile dudit article alimentaire dans le tuyau d'alimentation et un jeu limité de l'article alimentaire dans le passage au cours d'un traitement.

2. Tuyau d'alimentation selon la revendication 1, dans lequel la portion de paroi intérieure ajustable (118) présente un profil (116) qui est présent dans le passage (111), ledit profil (116) augmente en vue dans un sens le long du sens de transport (109) depuis l'ouverture d'entrée (107) jusqu'à l'ouverture de sortie (108).

3. Tuyau d'alimentation selon la revendication 1 ou 2, comprenant une unité de commande (442) située sur un côté extérieur (445) du tuyau d'alimentation (101) pour commander la portion de paroi intérieure ajustable (118).

4. Tuyau d'alimentation selon l'une quelconque des revendications précédentes, dans lequel le tuyau d'alimentation (101) comprend un actionneur (443, 751) pour actionner non manuellement la portion de paroi intérieure ajustable (118).

5. Tuyau d'alimentation selon la revendication 4, dans lequel l'actionneur (443, 751) comprend une unité d'actionneur électrique (443a, 751a).

6. Tuyau d'alimentation selon la revendication 4 ou 5, comprenant en outre une unité de mesure (446) pour mesurer la taille d'un article alimentaire, en utilisation, inséré dans le passage de tuyau d'alimentation (111), et une unité de commande (442) pour commander l'actionneur (443, 751) pour actionner la portion de paroi intérieure ajustable (118), dans lequel l'unité de commande (442), en utilisation, commande l'actionneur (443, 751) pour ajuster la portion de paroi intérieure ajustable (118) à la taille dudit article alimentaire mesurée par l'unité de mesure (446).

7. Robot-mixeur comprenant un boîtier (103), un outil de transformation alimentaire (104), prévu dans ledit boîtier (103) et configuré pour traiter un article alimentaire, et le tuyau d'alimentation (101) selon l'une quelconque des revendications précédentes pour coopérer avec ledit boîtier (103).

8. Robot-mixeur selon la revendication 7, dans lequel le tuyau d'alimentation (101) est conçu selon la revendication 4, dans lequel une interface utilisateur (750) pour commander le robot-mixeur (702) est prévue et dans lequel l'actionneur (443, 751) est commandé par l'intermédiaire de l'interface utilisateur (750).
